# FASCICULE DE BREVET EUROPEEN

(11) **EP 3 251 399 B1**
(45) Date de publication et mention de la délivrance du brevet: **06.11.2019**
(21) Numéro de dépôt: 16701742.5
(22) Date de dépôt: 25.01.2016
(51) Int. Cl.: H04W 24/04, H04L 12/64, H04L 12/26, H04W 88/16

(54) **PROCÉDÉ DE TEST D'UN DISPOSITIF DE RADIOCOMMUNICATION À TESTER D'UNE PASSERELLE D'UN PARC DE PASSERELLES**
VERFAHREN ZUM TESTEN EINER FUNKKOMMUNIKATIONSVORRICHTUNG EINES GATEWAYS IN EINEM GATEWAY-POOL
METHOD FOR TESTING A TEST RADIO COMMUNICATIONS DEVICE OF A GATEWAY IN A GATEWAY POOL

(30) Priorité: 27.01.2015 FR 1550589
(43) Date de publication de la demande: 06.12.2017
(73) Titulaire: Sagemcom Broadband SAS, 92500 Rueil-Malmaison (FR)
(72) Inventeur: JAULIN, Jean-Philippe, 92500 Rueil Malmaison (FR); DANGY-CAYE, Nicolas, 92500 Rueil Malmaison (FR)
(74) Mandataire: Cabinet Le Guen Maillet
(86) Numéro de dépôt international: PCT/EP2016/051423
(87) Numéro de publication internationale: WO 2016/120194

(56) Documents cités:
- WO-A1-2008/127631
- WO-A1-2013/142967
- GB-A- 2 482 587
- JP-A- 2005 328 230
- US-A1- 2007 050 240
- US-A1- 2009 316 628
- US-A1- 2010 182 915

## Description

La présente invention concerne un procédé de test d'un dispositif de radiocommunication à tester d'une passerelle d'un parc de passerelles.

Dans la présente demande de brevet, une passerelle (gateway en anglais) désigne un équipement qui fait le lien entre au moins deux réseaux distincts, l'un de nature étendue WAN (Wide Area Network), l'autre de nature locale de type LAN (Local Area Network) ou WLAN (Wireless Local Area Network). L'interface d'une passerelle avec le réseau étendu WAN peut être de type xDSL (par exemple ADSL). L'interface avec le réseau local LAN considéré dans la présente invention est sans fil (WLAN), par exemple du type Wi-Fi et est assurée par ce qui est appelé, dans la présente description, un dispositif de radiocommunication.

Le test d'un dispositif de radiocommunication d'une passerelle qui l'incorpore permet de déterminer la validité fonctionnelle de celui-ci et peut être réalisé, soit à l'issue de la production de cette passerelle, soit en cours de son utilisation par un utilisateur pour notamment diagnostiquer une éventuelle panne. Généralement, il nécessite la mise en œuvre de moyens externes à la passerelle à tester pour le réaliser, ce qu'un utilisateur n'a généralement pas.

Particulièrement dans le cas des nombreux dispositifs de radiocommunication qui peuvent être intégrés dans une passerelle (Wi-Fi 2,4GHz, Wi-Fi 5GHz, Bluetooth, Zigbee, DECT, etc.), un tel test est toujours délicat. En effet, la liaison entre l'un de ces dispositifs de radiocommunication de la passerelle considérée et un appareil distant, généralement un appareil de test, met en œuvre plusieurs interfaces :
- Au sein de la passerelle elle-même, une interface entre le processeur principal gérant la communication pour la passerelle considérée et le composant émetteur-récepteur radiofréquence qui est en charge de la communication ainsi qu'une interface physique entre ce composant RF et au moins une antenne (composant RF et antennes forment ensemble le dispositif de radiocommunication à tester). Cette interface physique peut être constituée d'un grand nombre de composants passifs (filtres, composants d'adaptation, etc.), ainsi que de composants actifs (amplificateurs).
- Une interface constituée du milieu aérien servant de support à la propagation des ondes radio fréquences entre la passerelle elle-même et l'appareil distant.
- Au sein de l'appareil distant, une interface physique entre sa ou ses antennes et un composant radiofréquence en charge de la communication et une interface entre ce composant RF et le processeur principal gérant la communication pour l'appareil distant.

De plus, l'établissement d'une communication entre la passerelle à tester et un appareil distant nécessite la mise en œuvre de protocoles de radiocommunication propres à chacune des technologies utilisées par les dispositifs de radiocommunication. Suivant la technologie utilisée, il peut être nécessaire de mettre en œuvre des clefs (WEP, WPA, etc. dans le cas du standard WiFi, PIN code dans le cas du standard Bluetooth, etc.), des protections de type droits d'accès ou liste d'adresses MAC autorisées, ou autre.

Le contrôleur principal d'une passerelle, du fait qu'il établit un dialogue logique avec le composant émetteur-récepteur RF et lui, est en mesure de connaître l'état de l'interface entre eux. Le diagnostic du dispositif de radiocommunication dans son ensemble (composant RF + antennes) revient donc à diagnostiquer le fonctionnement du composant RF ainsi que celui de son interface avec la ou les antennes de la passerelle.

Plusieurs méthodes connues sont aujourd'hui utilisées pour effectuer un diagnostic d'un dispositif de radiocommunication.

Selon une méthode particulière, on effectue le test séparé de la chaîne d'émission et de la chaîne de réception au moyen d'un ou plusieurs appareils de test externes. Ce type de test est largement utilisé lors des phases de fabrication ou de dépannage, et nécessite l'emploi d'un matériel spécialisé.

Pour vérifier le fonctionnement de la chaîne d'émission, la passerelle à tester est placée dans un mode dit "test émission" dans lequel son dispositif de radiocommunication transmet un signal de test particulier et connu. Un appareil de mesure distant de type analyseur reçoit alors le signal de test normalement transmis par la passerelle, l'analyse et en donne les caractéristiques. La différence entre le résultat obtenu et le résultat attendu peut renseigner le technicien sur le comportement de la chaîne d'émission.

De la même manière, pour vérifier le fonctionnement de la chaîne de réception, un appareil de mesure distant de type générateur transmet au dispositif de radiocommunication de la passerelle un signal de test particulier et connu. La passerelle est placée dans un mode dit "test réception" dans lequel son dispositif de radiocommunication retourne un signal reflétant le signal qu'il reçoit. La différence entre le résultat obtenu et le résultat attendu peut renseigner le technicien sur le comportement de la chaîne de réception.

Ce type de test permet de caractériser les chaînes d'émission et de réception de manière indépendante tout en faisant abstraction du protocole de communication mis en œuvre. Il est tout à fait adapté au dépannage, mais à cause de la nécessité d'utiliser un matériel complexe externe, il ne peut être utilisé à des fins de diagnostic sur le terrain chez un utilisateur non technicien.

Une autre méthode est une méthode de diagnostic de la chaîne d'émission au moyen d'un détecteur de champ radioélectrique. Ce procédé basique et largement connu de l'homme de l'art consiste à mesurer le champ émis par une chaîne de transmission au moyen d'un détecteur de champ radioélectrique relié à une antenne de mesure. Ce type de mesure donne une bonne information sur le niveau de signal réellement transmis par l'antenne, et donc sur le bon état de l'ensemble de la chaîne de transmission. Néanmoins, cette méthode ne permet pas de caractériser les performances de la chaîne de réception.

Une autre méthode est un diagnostic de la chaîne de réception au moyen d'un générateur de signal de test. Une telle méthode est notamment décrite dans le brevet US-A-8280442 et consiste à évaluer les effets d'un signal particulier injecté dans la chaîne de réception, et ainsi de caractériser ses performances. Ce procédé ne permet pas non plus de caractériser les performances de la chaîne de transmission.

De plus, ces dernières méthodes nécessitent l'emploi de composants dont la seule fonction est d'assurer ce diagnostic, ce qui induit donc un coût supplémentaire dans l'équipement.

Des autres références se trouvent dans US 200/0316628, qui décrit un router pour envoyer des paquets de données sur plusieurs réseaux de communication sans fil distincts, et dans WO 2008/127631, qui décrit un procédé adaptatif de programmation de communications dans un réseau mesh sans fils.

Le but de la présente invention est de proposer un procédé de diagnostic d'un dispositif de radiocommunication d'une passerelle qui résout les problèmes posés par les méthodes de diagnostic de l'art antérieur qui viennent d'être brièvement décrites.

A cet effet, la présente invention concerne un procédé de test d'un dispositif de radiocommunication d'une passerelle à tester d'un parc de passerelles. Il est caractérisé en ce qu'il comporte les étapes suivantes :
- une étape d'émission par ledit dispositif de radiocommunication de ladite passerelle à tester d'un message de requête de réponse requérant de tout dispositif de radiocommunication d'une passerelle dudit parc voisine qui a reçu ledit message, une réponse sous forme d'un message de réponse,
- une étape de réception de tout éventuel message de réponse et
- une étape de diagnostic diagnostiquant un bon fonctionnement dudit dispositif de radiocommunication de la passerelle à tester en cas de réception d'au moins un message de réponse.

Selon une caractéristique avantageuse, ledit message de requête de réponse demande que seules des passerelles voisines présentant des caractéristiques de communication particulières y répondent.

Selon une caractéristique avantageuse, ladite étape de diagnostic diagnostique un possible dysfonctionnement dudit dispositif de radiocommunication de la passerelle à tester en cas d'absence de réception d'un message de réponse.

Selon une caractéristique avantageuse, ladite passerelle à tester est liée à un système gestionnaire dudit parc de passerelle, ledit procédé étant alors caractérisé en ce qu'il comporte :
- une étape de transmission, mise en œuvre par ladite passerelle à tester, d'un message de commande audit système gestionnaire, et
- une étape d'activation, mise en œuvre par ledit système gestionnaire à réception dudit message de commande, d'au moins un dispositif de radiocommunication d'une passerelle voisine dudit parc qui est estimée être à une distance géographique de ladite passerelle à tester inférieure à une distance prédéterminée, si une telle passerelle existe.

Selon une caractéristique avantageuse, ladite étape de transmission est mise en œuvre en cas d'absence de réception d'un message de réponse à l'étape de diagnostic, ladite étape d'émission, ladite étape de réception et ladite étape de diagnostic étant de nouveau mises en œuvre par ledit dispositif de radiocommunication de la passerelle à tester à réception d'un message d'acquittement que l'étape activation a été mise en œuvre.

Selon une caractéristique avantageuse, ledit procédé comporte encore :
- une étape de transmission, mise en œuvre par ledit système gestionnaire dans le cas où aucune passerelle dudit parc n'est à une distance géographique estimée de ladite passerelle à tester inférieure à une distance prédéterminée, d'un message d'avertissement à ladite passerelle à tester, et
- une étape de mise en œuvre par ladite passerelle à tester à réception dudit message d'avertissement, diagnostiquant un possible dysfonctionnement du dispositif de radiocommunication de ladite passerelle à tester.

Selon une caractéristique avantageuse, ladite étape de diagnostic nouvellement mise en œuvre diagnostique soit un bon fonctionnement dudit dispositif de radiocommunication de la passerelle à tester en cas de réception d'au moins un message de réponse, soit un possible dysfonctionnement dudit dispositif de radiocommunication de la passerelle à tester en cas d'absence de réception d'un message de réponse.

Selon une caractéristique avantageuse, ladite étape d'activation comprend :
- une étape de sélection d'une passerelle dudit parc de passerelles si la distance géographique qui la sépare de ladite passerelle à tester est inférieure à une distance prédéterminée,
- une étape de vérification que la passerelle sélectionnée est inactive et si elle l'est
- une étape d'activation de ladite passerelle sélectionnée.
et si elle ne l'est pas :
- une étape de transmission à ladite passerelle à tester d'un message d'avertissement qui, à réception, met en œuvre une étape de diagnostic diagnostiquant un possible dysfonctionnement du dispositif de radiocommunication de la passerelle à tester.

Selon une caractéristique avantageuse, ledit procédé comporte une étape de vérification, mise en œuvre par ledit système gestionnaire à réception dudit message de commande, qu'au moins une passerelle est située à une distance inférieure à une distance prédéterminée de ladite passerelle à tester, et, si tel n'est pas le cas, une étape de transmission à ladite passerelle à tester d'un message d'avertissement qui, à réception, met en œuvre une étape de diagnostic diagnostiquant un possible dysfonctionnement du dispositif de radiocommunication de la passerelle à tester.

Selon une caractéristique avantageuse, ledit procédé comporte une étape de désactivation de la ou les passerelles qui ont été activées par ledit système gestionnaire à l'occasion de la mise en œuvre de l'étape d'activation.

Selon une caractéristique avantageuse, ladite étape de transmission est mise en œuvre sous l'impulsion d'une étape de déclenchement, elle-même mise en œuvre par ladite passerelle arbitrairement, périodiquement ou suite à un événement.

Selon une caractéristique avantageuse, ledit procédé comporte une étape, mise en œuvre par ledit système gestionnaire, pour demander à ladite passerelle de mettre en œuvre ladite étape de déclenchement.

La présente invention concerne également une passerelle d'un parc de passerelles gérées par un système gestionnaire dudit parc, ladite passerelle comportant au moins un dispositif de radiocommunication. Ladite passerelle, selon l'invention, est caractérisée en ce qu'elle comporte :
- des moyens de commande dudit dispositif de radiocommunication pour qu'il émette un message de requête de réponse requérant de tout dispositif de radiocommunication d'une passerelle voisine dudit parc recevant ledit message, une réponse sous forme d'un message de réponse,
- des moyens de réception de tout éventuel message de réponse et
- des moyens de diagnostic diagnostiquant un bon fonctionnement dudit dispositif de radiocommunication en cas de réception d'au moins un message de réponse par ledit dispositif de radiocommunication.

Selon une caractéristique avantageuse, ladite passerelle comporte :
- des moyens de transmission d'un message de commande audit système gestionnaire pour qu'il active au moins un dispositif de radiocommunication d'une passerelle voisine dudit parc qui est estimée être à une distance géographique de ladite passerelle inférieure à une distance prédéterminée, si une telle passerelle existe, et
- des moyens de réception d'un message d'acquittement de l'activation par ledit système gestionnaire d'une nouvelle passerelle distante et de commande d'une nouvelle émission d'un message de commande, une nouvelle réception et un nouveau diagnostic.

La présente invention concerne encore un système gestionnaire d'un parc de passerelles qui est caractérisé en ce qu'il comporte :
- des moyens de réception d'un message de commande transmis d'une passerelle requérante,
- des moyens d'activation pour, à réception d'un message de commande par lesdits moyens de réception, activer au moins un dispositif de radiocommunication d'une passerelle dudit parc qui est estimée être à une distance géographique de ladite passerelle requérante inférieure à une distance prédéterminée, si une telle passerelle existe,
- des moyens de transmission à ladite passerelle requérante d'un message d'acquittement que le dispositif de radiocommunication de ladite autre passerelle a été activé.

La présente invention concerne aussi un programme d'ordinateur chargé dans une mémoire d'une unité de contrôle d'une passerelle comprenant des instructions qui, lorsqu'elles sont exécutées par un processeur de ladite unité de contrôle, mettent en œuvre un procédé de test tel qu'il vient d'être décrit.

La présente invention concerne enfin des moyens de stockage qui sont caractérisés en ce qu'ils stockent un programme d'ordinateur comprenant des instructions pour mettre en œuvre, lorsqu'il est chargé dans une mémoire d'une unité de contrôle d'une passerelle et qu'il est exécuté par un processeur de ladite unité de contrôle, un procédé tel qu'il vient d'être décrit.

Les caractéristiques de l'invention mentionnées ci-dessous, ainsi que d'autres, apparaîtront plus clairement à la lecture de la description suivante d'exemples de réalisation, ladite description étant faite en relation avec les dessins joints, parmi lesquels :
La Fig. 1 est un schéma synoptique d'un système de communication qui inclut un parc de passerelles, dont l'une au moins est conforme à la présente invention, et un système gestionnaire dudit parc de passerelles,
La Fig. 2 est un diagramme illustrant un premier mode de réalisation d'un procédé de test selon la présente invention,
La Fig. 3 est un diagramme illustrant un second mode de réalisation d'un procédé de test selon la présente invention,
La Fig. 4 est un diagramme illustrant un troisième mode de réalisation d'un procédé de test selon la présente invention, et
La Fig. 5 est un schéma synoptique d'une passerelle et d'un système gestionnaire selon la présente invention, liés l'un à l'autre via un réseau.

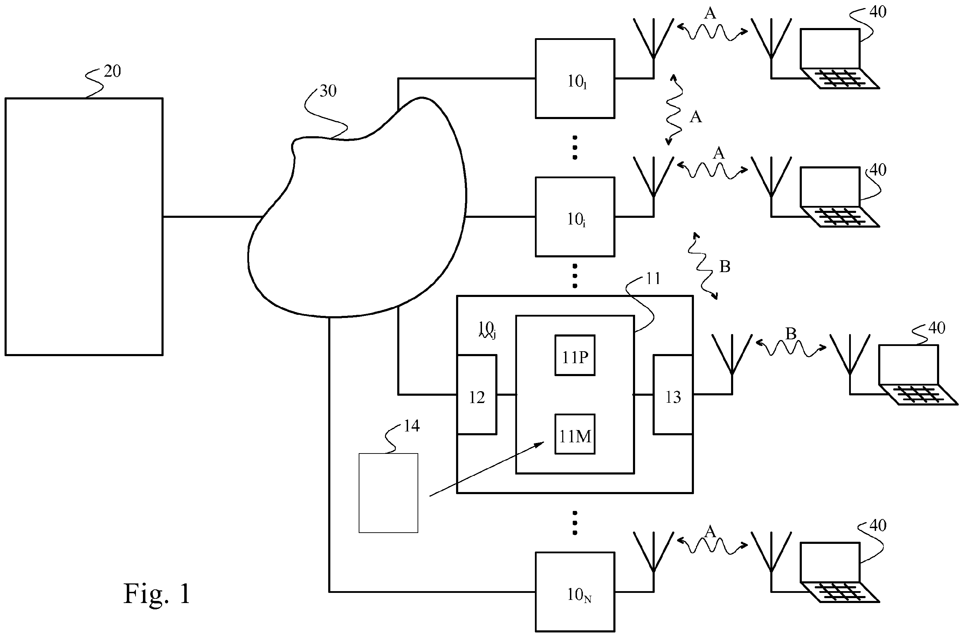

On a représenté à la Fig. 1 un parc de N passerelles 10₁ à 10_{N} qui sont reliées, via un même réseau de communication 30, à un système gestionnaire 20 du parc de passerelles en question. Le système de gestion 20 peut être constitué d'un unique serveur ou au contraire d'une pluralité de serveurs prévus pour communiquer entre eux via un unique réseau ou une pluralité de réseaux pouvant inclure le réseau de communication 30.

La passerelle 10ⱼ a été agrandie pour montrer les constituants de toute passerelle qui intéressent la présente invention. Ainsi, chaque passerelle 10 comporte une unité de contrôle 11 prévue pour, en autres, piloter une interface 12, par exemple du type xDSL filaire, sur fibres optiques ou autres, avec le réseau 30 ainsi qu'au moins un dispositif de radiocommunication 13.

Le dispositif de radiocommunication 13 est par exemple du type Wi-Fi. On rappelle ici que la norme Wi-Fi est relative à un ensemble de protocoles de communication régis pour les normes ISO/EIC 8802/11 (IEEE 802.11).

Ce dispositif de radiocommunication 13 permet à la passerelle 10 concernée de communiquer avec au moins un équipement 40, par exemple un ordinateur tel que représenté, également pourvu d'un tel dispositif de radiocommunication (non représenté).

En même temps qu'elle peut communiquer avec un équipement 40, une passerelle 10 émet des signaux de balise permettant à un équipement 40 de se synchroniser sur ladite passerelle 10 et aussi de s'enregistrer auprès de cette passerelle 10. La portée des signaux de balise peut être assez élevée (de l'ordre d'une centaine de mètres) si bien qu'un même équipement 40 ou une même passerelle peut recevoir les signaux balises de passerelles voisines, par exemple en zone urbaine où à une même adresse peuvent se trouver des dizaines de passerelles. On entend ici par "passerelles voisines" d'un équipement 40 ou d'une passerelle 10 donnée, les passerelles qui sont susceptibles de recevoir des signaux, notamment des signaux balises, dudit équipement ou de ladite passerelle et dont les signaux, notamment les signaux de balise, qu'elles sont susceptibles d'émettre sont reçus par ledit équipement ou par ladite passerelle.

Par exemple, à la Fig. 1, la passerelle 10i reçoit les signaux émis par la passerelle 10₁ (flèche A). Elles sont donc voisines l'une de l'autre, au sens de la présente invention. La passerelle 10ⱼ est susceptible de recevoir les signaux émis par la passerelle 10ᵢ, mais n'étant pas activée, elle ne les reçoit effectivement pas. De même, elle est susceptible d'émettre des signaux vers la passerelle 10ᵢ qui les recevrait alors, mais ne les émet pas, n'étant pas activée. Cette situation est illustrée par des flèches B. Malgré cette situation, les passerelles 10ᵢ et 10ⱼ sont considérées voisines l'une de l'autre au sens du présent brevet. Par contre, la passerelle 10ⱼ ne reçoit pas les signaux émis par la passerelle 10_{N} et réciproquement. Elles ne sont pas voisines l'une de l'autre.

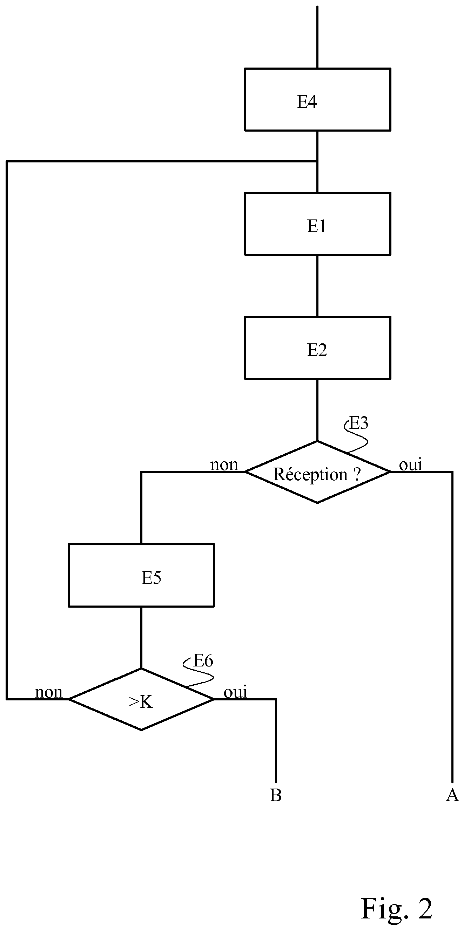

Un mode de réalisation particulier d'un procédé de test selon la présente invention est maintenant décrit en relation avec la Fig. 2.

Ce procédé de test comporte une étape E1 d'émission par le dispositif de radiocommunication 13 de la passerelle 10 à tester d'un message de requête de réponse requérant de tout dispositif de radiocommunication 13 d'une passerelle distante dudit parc recevant ledit message une réponse sous forme d'un message de réponse. Les passerelles voisines qui répondront à ce message sont celles qui sont présentes dans la zone de couverture du dispositif de radiocommunication 13 de la passerelle 10 à tester et qui, de plus, ont leur dispositif de radiocommunication qui est actif, c'est-à-dire qu'il fonctionne. Il s'agit donc des passerelles voisines actives de la passerelle 10 à tester.

Par exemple, dans le cas d'un dispositif de radiocommunication de type Wi-Fi, cette étape E1 consiste à mettre en œuvre une procédure de balayage actif (active scanning) et à ainsi transmettre sur un canal de diffusion une trame de gestion dite "probe request" associée à des paramètres adaptés. Une telle méthode est notamment utilisée par des périphériques Wi-Fi à la recherche d'une passerelle sur laquelle s'appairer.

L'étape E1 est généralement effectuée sur l'ensemble des canaux disponibles pour l'exploitation du dispositif de radiocommunication 13 concerné. Par exemple, dans le cas d'un dispositif de type Wi-Fi de la bande ISM à 2,4 GHz, l'étape E1 est effectuée sur chacun des 13 canaux.

Selon une variante de réalisation, ledit message de requête de réponse est tel que seules des passerelles voisines présentant des caractéristiques de communication particulières y répondent. Ces caractéristiques de communication peuvent être le ou des canaux particuliers utilisés pour l'émission dudit message de requête de réponse, notamment si les caractéristiques des passerelles voisines sont connues. Par exemple aussi, le message de requête de réponse émis à l'étape E1 fait référence à une ou plusieurs passerelles particulières connues comme étant voisines de la passerelle 10 à tester parce que, par exemple, elles ont déjà, dans le passé, répondu à un tel message émis par le dispositif de radiocommunication 13 de la passerelle 10 à tester. Par exemple, dans le cas d'un dispositif de radiocommunication de type Wi-Fi, ce message est une trame de gestion "probe request" spécifiant le nom de réseau SSID et/ou le canal de chaque passerelle potentiellement joignable.

Toutes les passerelles qui recevront le message de requête de réponse, tel qu'une trame de gestion "probe request" dans le cas d'un système Wi-Fi, s'il y en a, répondront par émission à leur tour d'un message de réponse qui, dans le cas d'un système de type Wi-Fi, peut par exemple être une trame de gestion dite "probe response".

Une étape E2 est une étape de réception du ou des messages de réponse émis par au moins une passerelle distante sollicitée par le message de requête de réponse émis à l'étape E1. Plus exactement, afin de fiabiliser le diagnostic et d'amoindrir l'effet d'éventuelles erreurs de communication liées à différentes causes externes, l'étape E2 effectue une analyse de chacun des canaux concernés pendant un temps prédéterminé t suffisant long pour laisser aux passerelles sollicitées par le message de requête de réponse émis par le dispositif de radiocommunication 13 le temps d'y répondre.

Une étape E3 est une étape de diagnostic qui consiste à rendre un diagnostic du dispositif de radiocommunication 13 de la passerelle 10 à tester.

Si, à l'étape E2, le dispositif de radiocommunication 13 de la passerelle 10 à tester a reçu un message de réponse d'au moins une passerelle voisine et du fait qu'aussi bien son émetteur que son récepteur ont participé à l'exécution des étapes E1 et E2, c'est que ce dispositif de radiocommunication 13 est parfaitement opérationnel. L'étape E3 diagnostique alors un bon fonctionnement dudit dispositif de radiocommunication 13 (cas A).

Les étapes d'émission E1, de réception E2 et de diagnostic E3 peuvent être réitérées un certain nombre K de fois (comme cela est le cas à la Fig. 2) de manière à éviter un faux diagnostic qui pourrait être la conséquence d'une erreur de communication liée à différentes causes externes. Pour ce faire, le procédé comporte par exemple, une étape E4 d'initialisation d'un compteur à la valeur 0, une étape E5 d'incrémentation dudit compteur à chaque exécution des étapes E1, E2 et E3 et une étape E6 de vérification de la valeur dudit compteur comparée à un nombre maximum K d'exécutions.

Que les étapes E4 et E5 permettant la réitération soient mises en œuvre ou pas, en absence de réception d'un message de réponse, dans ce premier mode de réalisation, l'étape E3 diagnostique un possible dysfonctionnement du dispositif de radio communication 13 de la passerelle 10 à tester si bien que la passerelle 10 à tester doit faire l'objet d'un retour à l'atelier pour réparation (cas B).

Néanmoins, une absence de réception d'un message de réponse (par exemple à l'expiration du temps t) n'est pas nécessairement causée par un dysfonctionnement du dispositif de radiocommunication 13 de la passerelle 10 à tester. De manière générale, une absence de réponse d'un dispositif de radiocommunication 13 d'une passerelle distant peut être causée par l'une des situations suivantes.

Au moins un des composants du dispositif de radiocommunication 13 de la passerelle 10 à tester est en panne rendant inopérante une quelconque communication. La passerelle 10 à tester doit alors être dépannée, et donc être retournée à l'atelier.

Une autre cause peut être le fait qu'aucune passerelle distante n'est effectivement suffisamment proche du dispositif de radiocommunication 13 de la passerelle 10 à tester pour soit, d'une part, recevoir le message de demande de réponse émis par ledit dispositif de radiocommunication 13 de la passerelle 10 à tester, soit, d'autre part, permettre à ce dispositif de radiocommunication 13 de recevoir le message de réponse qu'une éventuelle passerelle distante aurait quand même envoyé. Dans ce cas, aucun diagnostic n'est possible car toute nouvelle exécution des étapes E1 et E2 se soldera par une nouvelle absence de réponse. La passerelle 10 à tester devra également être retournée à l'atelier pour une analyse plus détaillée.

Une autre cause peut concerner une ou plusieurs passerelles distantes qui sont néanmoins suffisamment proches géographiquement parlant du dispositif de radiocommunication 13 de la passerelle 10 à tester pour en recevoir le message de demande de réponse et pour y répondre, et pour lesquelles, du fait qu'elles sont dans un état où aucun dialogue n'est possible avec le dispositif de radiocommunication 13 de la passerelle à tester, le dispositif de radiocommunication 13 de la passerelle 10 n'a pas reçu de réponse à son étape E2. Par la suite, ces passerelles distantes sont dites, d'une part, voisines et, d'autre part, non-activées. L'état particulier de ces passerelles distantes peut être la conséquence de diverses situations : passerelle non alimentée, instance de réseau sans fil cachée (SSID caché), utilisation d'un filtrage d'adresses mac, type de modulations non mises en œuvre, etc.).

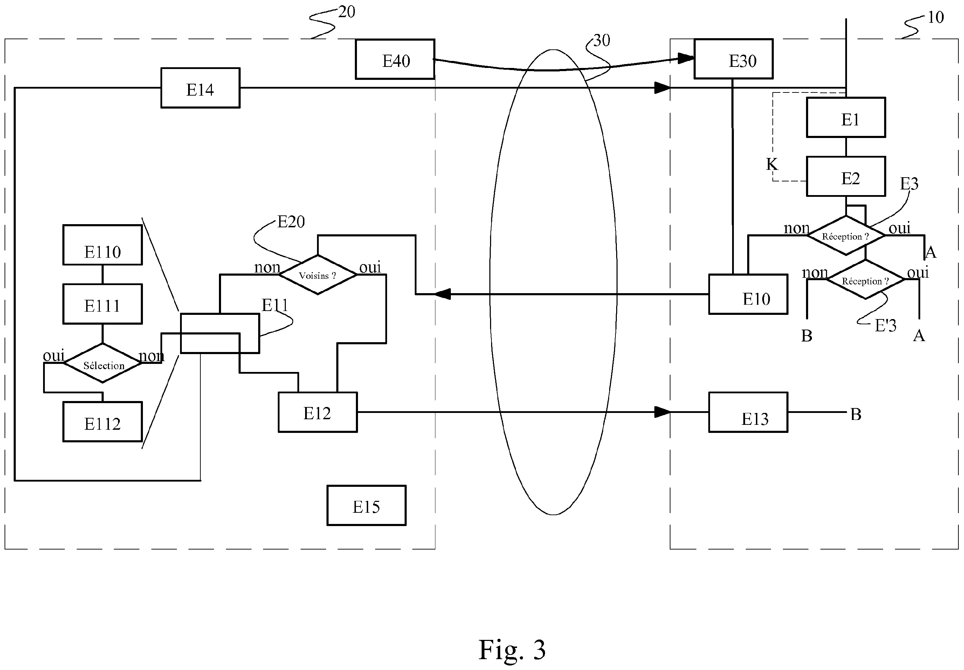

A la Fig. 3, on a représenté un second mode de réalisation de la présente invention qui permet de rendre un diagnostic dans d'éventuelles situations de ce dernier type où le dispositif de radiocommunication 13 de la passerelle 10 à tester ne reçoit pas de réponse de passerelles distantes alors qu'elles sont suffisamment proches géographiquement parlant de la passerelle 10 à tester pour qu'il en soit ainsi.

Ce mode de réalisation, comme on le verra par la suite, tire partie du fait que le gestionnaire d'un parc de passerelles, connaît l'architecture de son réseau, et particulièrement la localisation géographique de chacune des passerelles de son parc. En effet, chacune de ces passerelles est raccordée à une terminaison physique du réseau identifiée (l'extrémité se trouvant dans le local de l'abonné). Par exemple une ligne cuivre type xDSL, ou une arrivée de fibre optique, ou encore une arrivée de câble coaxial. Cette terminaison physique a été installée par le gestionnaire de parcs, ou par un de ses représentants à une adresse géographique particulière, et correspond en général à la souscription d'un abonnement.

Lors de l'établissement de la liaison entre une passerelle 10 et le système gestionnaire de parcs 20, des informations sont échangées entre eux, notamment une identification de l'abonné et de la passerelle 10. Le système 20 gestionnaire du parc peut également connaître simplement l'identification de la terminaison physique du réseau qui a permis l'établissement de cette liaison. Ces informations couramment disponibles pour un système gestionnaire de parcs lui permettent d'établir simplement une carte de répartition géographique des passerelles de son parc.

Le procédé de test selon ce second mode de réalisation comporte des étapes qui sont mises en œuvre par la passerelle 10 dont un dispositif de radiocommunication 13 est à tester (ces étapes sont sous une boîte 10 représentant cette passerelle 10) et des étapes qui sont mises en œuvre par un système 20 distant sous le contrôle d'un gestionnaire d'un parc de passerelles (ces étapes sont sous une boîte 20 représentant ledit système distant, dit système gestionnaire du parc). La passerelle 10 et le système gestionnaire 20 sont en communication l'un avec l'autre via le réseau 30.

Le procédé de test selon ce second mode de réalisation comprend des étapes d'émission E1, de réception E2 et de diagnostic E3 identiques à celles du procédé de test selon le premier mode de réalisation. De plus, ces étapes peuvent être réitérées un certain nombre K de fois (pointillés encadrant la lettre K à la Fig. 3). De la même manière que dans le premier mode de réalisation, il résulte de la mise en œuvre de ces étapes, un diagnostic à l'étape E3 soit d'un fonctionnement correct du dispositif de radiocommunication 13 de la passerelle 10 à tester (cas A) si au moins une réponse au message de requête de réponse émis par son dispositif de radiocommunication 13 a été apportée par au moins une passerelle distante, soit d'une absence de réponse à ce message.

Il comprend une étape E10 de transmission d'un message de commande au système gestionnaire 20, par exemple via l'interface ADSL de la passerelle 10 à tester et le réseau 30 ou tout autre interface à l'exception de celle impliquant le dispositif de radiocommunication 13 à tester, mise en œuvre en cas de diagnostic d'absence de réception de réponse à l'étape E3. Ce message de commande est un message destiné au système gestionnaire 20 pour qu'il active au moins un dispositif de radiocommunication d'au moins une passerelle voisine dont la distance estimée à la passerelle concernée est inférieure à une distance prédéterminée. Par exemple, un tel message est un message de commande de gestion de type TR-069.

Le procédé comporte encore une étape E11, mise en œuvre par le système gestionnaire 20 à réception d'un message de commande transmis par une passerelle, en l'occurrence la passerelle 10 à tester, d'activation d'un dispositif de radiocommunication d'au moins une passerelle dudit parc qui est estimée être à une distance géographique de la passerelle concernée inférieure à une distance prédéterminée.

L'étape E11 peut inclure une étape d'estimation E110, sur la base de l'adresse postale de la terminaison physique sur laquelle est connectée la passerelle 10 à tester et de celle des terminaisons physiques sur lesquelles sont respectivement connectées les passerelles gérées par le gestionnaire du parc de passerelles et de la distance estimée qui sépare ladite passerelle requérante 10 de chaque passerelle dudit parc.

Elle inclut également une étape de sélection E111 des passerelles pour lesquelles cette distance est inférieure à une distance prédéterminée. Cette distance prédéterminée est, par exemple, une distance estimée de la portée utile d'un réseau sans fil (quelques centaines de mètres pour un réseau Wi-Fi 2,4GHz) au-delà de laquelle il ne serait pas raisonnable d'espérer une quelconque communication. Par ailleurs, pour une même adresse postale, une sélection pourra de la même manière être faite par exemple en appréciant la distance entre deux bâtiments, ou encore entre deux étages.

Il peut résulter de l'étape E111 qu'aucune passerelle ne soit sélectionnée. Dans ce cas, le diagnostic ne peut pas être affiné et la passerelle 10 à tester devra alors faire l'objet d'un retour à l'atelier pour une analyse plus détaillée. Une étape E12 mise en œuvre par le système gestionnaire 20 transmet un message d'avertissement à la passerelle à tester 10 pour l'avertir de la situation qui, à réception, met en œuvre une étape de diagnostic E13 diagnostiquant un possible dysfonctionnement du dispositif de radiocommunication de ladite passerelle (cas B).

Il peut résulter de l'étape E111 qu'au moins une passerelle a été sélectionnée. L'étape E11 inclut également une étape E112 d'activation proprement dite d'un dispositif de radiocommunication 13 de la ou les passerelles sélectionnées à l'étape E111.

L'étape d'activation E112 consiste à activer le ou au moins un des dispositifs de radiocommunication 13 d'une passerelle sélectionnée de manière qu'il soit compatible avec le dispositif de radiocommunication 13 de la passerelle 10 à tester et qu'il puisse être apte à répondre à un message de requête de réponse émanant de la passerelle 10 à tester, notamment en faisant en sorte qu'au moins une instance de réseau de radiocommunication présent sur ce dispositif de radiocommunication 13 partage les mêmes protocoles, modulations, canaux de communications, identifiants, etc. que le dispositif de radiocommunication 13 de la passerelle 10 à tester.

Une étape E14, mise en œuvre par le système gestionnaire 20, transmet un message d'acquittement à la passerelle requérante 10 pour l'avertir que de nouvelles passerelles voisines ont été activées.

A la réception d'un message d'acquittement du système gestionnaire 20, les étapes d'émission E1, de réception E2 et de diagnostic E3 sont de nouveau mises en œuvre par la passerelle 10 à tester.

Dans le présent mode de réalisation, l'étape de diagnostic nouvellement mise en œuvre (notée E3' à la Fig. 3), si elle constate que le dispositif de radiocommunication 13 a reçu un message de réponse d'au moins une passerelle voisine, diagnostique un bon fonctionnement dudit dispositif de radio communication à tester (cas A) et si, par contre, dans le cas contraire, elle constate une absence de réception d'une réponse, elle diagnostique un possible dysfonctionnement du dispositif de radiocommunication (cas B).

Une étape E15, mise en œuvre par le système gestionnaire 20, consiste à désactiver les passerelles que le système gestionnaire 20 avait activées à l'occasion de la mise en œuvre de l'étape d'activation E11. L'étape E15 peut être mise en œuvre automatiquement après l'expiration d'un délai préétabli ou sous requête de la passerelle 10 à tester à la suite de la mise en œuvre de l'étape E'3.

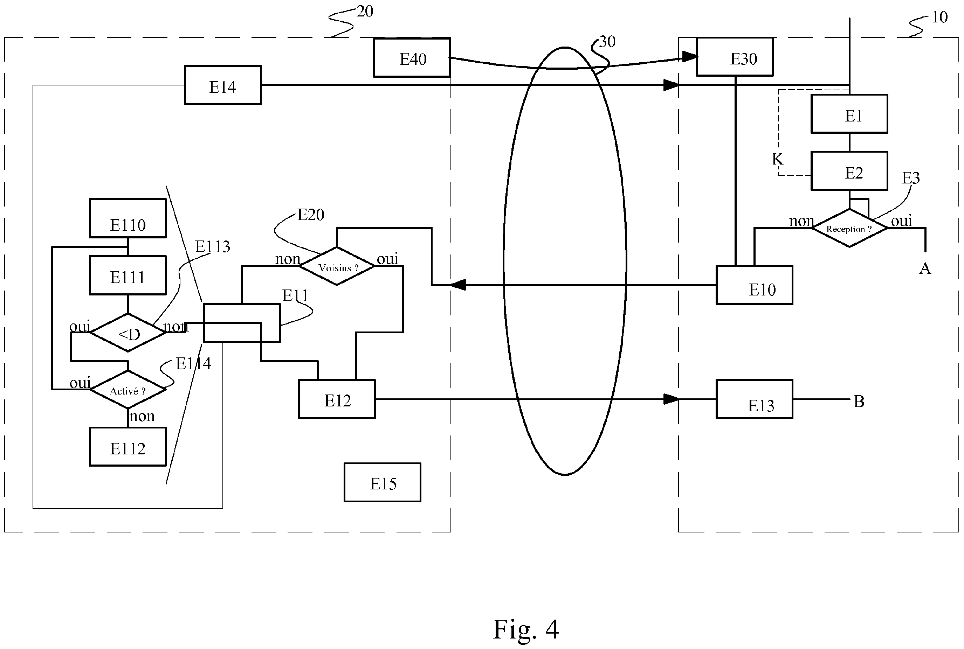

A la Fig. 4, on a représenté une variante de réalisation du second mode de réalisation de la présente invention.

Le procédé de test selon cette variante de réalisation comprend des étapes d'émission E1, de réception E2 et de diagnostic E3 identiques au mode précédent. De la même manière que dans le premier mode de réalisation, il résulte de la mise en œuvre de ces étapes, soit un diagnostic d'un fonctionnement correct du dispositif de radiocommunication 13 de la passerelle 10 à tester (cas A), soit une absence de réponse au message de demande de réponse émis par le dispositif de radiocommunication 13 de la passerelle 10 à tester.

Il comprend également une étape E10 de transmission d'un message de commande au système gestionnaire 20 mise en œuvre en cas de diagnostic d'une absence de réponse à l'étape E3.

Selon cette variante de réalisation, un processus itératif est mis en place tant que l'étape de diagnostic E3 constate une absence de réception d'une réponse. Pour ce faire, contrairement au second mode de réalisation décrit en relation avec la Fig. 4, l'étape E3 nouvellement mise en œuvre après une itération est identique à l'étape E3 mise en œuvre à la première itération.

Selon cette variante de réalisation, l'étape de sélection E111 consiste à sélectionner la passerelle distante de ladite passerelle 10 à tester qui se trouve, dans l'ordre croissant des distances à la passerelle 10 à tester, juste après la passerelle précédemment sélectionnée (dans une itération précédente). La première passerelle sélectionnée à la première itération est celle qui est le plus proche de la passerelle à tester 10.

Une étape E113 vérifie que la distance qui sépare la passerelle sélectionnée à l'étape E111 de la passerelle 10 à tester est inférieure à une distance prédéterminée D. Cette distance prédéterminée D est, par exemple, une distance estimée de la portée utile d'un réseau sans fil au-delà de laquelle il ne serait pas raisonnable d'espérer une quelconque communication.

Si tel n'est pas le cas, c'est qu'il n'existe pas de passerelle voisine autre que celles qui ont déjà fait l'objet d'une tentative de communication par les étapes E1 et E2 (comme on le verra par la suite). Dans ce cas, le diagnostic ne peut pas être affiné car la zone de couverture théorique maximale de la passerelle 10 à tester a été atteinte. La passerelle 10 à tester devra alors faire l'objet d'un retour à l'atelier pour une analyse plus détaillée. Une étape E12 mise en œuvre par le système distant 20 transmet un message à la passerelle à tester 10 pour l'avertir de la situation qui, à réception, diagnostique le cas B (étape E13).

Si tel est le cas, une étape E114 consiste à vérifier si la passerelle sélectionnée a un dispositif de radiocommunication 13 déjà activé. S'il l'est, il a donc déjà fait l'objet d'une tentative de communication correspondant à la mise en œuvre des étapes E1 à E3 qui est restée sans réponse. Dans ce cas, l'étape E111 est de nouveau mise en œuvre pour sélectionner une ou des nouvelles passerelles voisines.

S'il ne l'est pas, l'étape E112 est mise en œuvre par le système distant 20 pour activer un dispositif de radiocommunication 13 de la passerelle sélectionnée. Elle conduit alors à l'étape E14 de transmission d'un message d'acquittement et une nouvelle itération est lancée à réception, par la passerelle 10 à tester de ce message d'acquittement.

L'étape E15 de désactivation des passerelles que le système distant avait précédemment activées peut être mise en œuvre, dans cette variante de réalisation, à la réception de la requête juste avant l'étape E11. Ou, encore, de la manière explicitée pour le second mode de réalisation.

Selon l'un ou l'autre mode de réalisation selon les Figs. 3 ou 4, dans le message d'acquittement transmis à l'étape E14, peuvent se trouver des informations relatives à au moins une des caractéristiques relatives à la passerelle voisine nouvellement sélectionnée et activée. Ces informations peuvent être relatives au numéro du canal utilisé par cette passerelle sélectionnée, ou encore l'identification SSID du réseau qu'elle forme, son adresse MAC, etc. L'exécution de l'étape E1 qui fait suite à l'exécution de l'étape E11 peut être alors ciblée aux réseaux correspondant à cette ou ces caractéristiques, l'étape E1 requérant une réponse sur le canal correspondant, par exemple le réseau d'identification correspondante, par la passerelle d'adresse MAC correspondante, etc.

Dans l'un et l'autre modes de réalisation, le procédé de test de l'invention peut comporter une étape E20 de vérification, mise en œuvre par le système gestionnaire 20, qu'au moins une passerelle voisine activable est située à une distance raisonnable de la passerelle 10 à tester. Si tel est le cas, l'étape E20 conduit à l'étape E11. Dans le cas contraire, l'étape E20 conduit à l'étape E12.

La mise en œuvre de cette étape E20 permet d'accélérer le traitement du procédé de test de l'invention du fait qu'elle évite la mise en œuvre qui serait inutile de l'étape E11, consommatrice de ressources de calcul, dans le cas où la passerelle 10 à tester se trouve dans une zone où ne se trouve aucune autre passerelle qu'elle.

D'autres méthodes alternatives à celle qui a été concernant l'étape de sélection E111 sont envisageables pour sélectionner une ou plusieurs passerelles voisines les plus à même de communiquer avec une passerelle donnée à tester.

Le procédé de la présente invention peut ainsi comprendre une étape E30, mise en œuvre par toute passerelle conforme à l'invention, de déclenchement de l'étape de transmission d'un message de commande E10.

Cette étape E30 peut être déclenchée de manière arbitraire, périodique, ou suite à un quelconque événement, par exemple, à la première installation d'une passerelle.

Le système gestionnaire 20 peut également comporter une étape E40 de demande de mise en œuvre de l'étape de déclenchement E30.

Les références des passerelles voisines de la passerelle 10 à tester telles que les passerelles distantes sélectionnées à l'étape E111 sont stockées dans une base de données (non représentée) en relation avec toute passerelle 10 qui a transmis, par son étape E10, un message de commande au système gestionnaire 20. Ceci a pour conséquence, de permettre au système gestionnaire 20 du parc de passerelles de connaître le maillage fin de couverture réelle de son réseau, ainsi que de celui de ses concurrents, et d'exploiter cette information notamment pour la mise en œuvre de l'étape de sélection E111 lors du déroulement du processus de test de la présente invention.

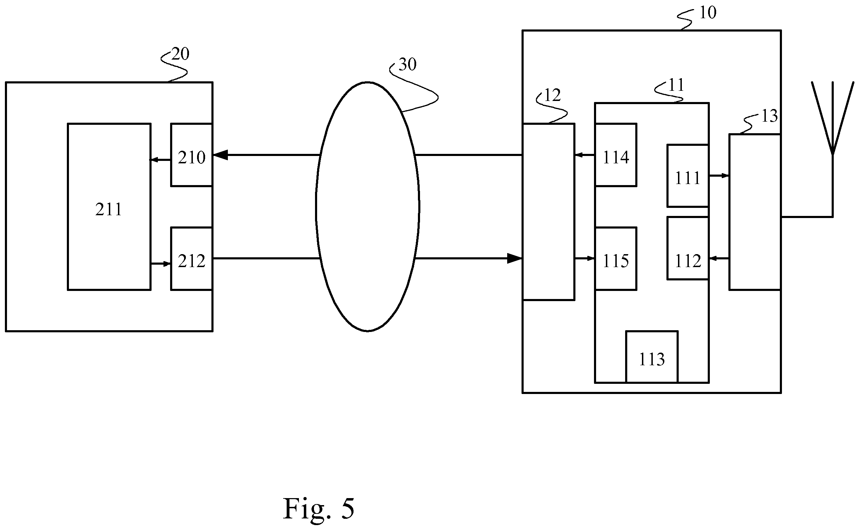

La présente invention concerne également une passerelle 10 d'un parc de passerelles gérées par un système gestionnaire 20 dudit parc qui est prévue pour mettre en œuvre un procédé de test selon la présente invention. Une telle passerelle est maintenant décrite en relation avec la Fig. 5. Elle comporte une interface 12 avec le réseau 30 ainsi qu'au moins un dispositif de radiocommunication 13. Elle comporte également une unité de contrôle 11, laquelle comporte en ce qui concerne la présente invention, des moyens de commande 111 dudit dispositif de radiocommunication 13 pour qu'il émette un message de requête de réponse requérant de tout dispositif de radiocommunication d'une passerelle voisine dudit parc recevant ledit message une réponse sous forme d'un message de réponse, des moyens de réception 112 de tout éventuel message de réponse et des moyens de diagnostic 113 diagnostiquant un bon fonctionnement dudit dispositif de radiocommunication 13 en cas de réception d'au moins un message de réponse par ledit dispositif de radiocommunication 13.

Dans un mode avantageux, il comporte encore des moyens 114 de transmission d'un message de commande audit système gestionnaire 20 pour qu'il active au moins un dispositif de radiocommunication d'une passerelle voisine dudit parc qui est estimée être à une distance géographique de ladite passerelle inférieure à une distance prédéterminée, si une telle passerelle existe, et des moyens 115 de réception d'un message d'acquittement de l'activation d'une nouvelle passerelle distante opérée par ledit système gestionnaire 20 déclenchant la commande d'une nouvelle émission d'un message de commande, une nouvelle réception et un nouveau diagnostic.

A la Fig. 5 est également représenté un système gestionnaire 20 selon la présente invention. Il comporte des moyens de réception 210 d'un message de commande transmis d'une passerelle requérante, des moyens d'activation 211 pour, à réception d'un message de commande par lesdits moyens de réception 210, activer au moins un dispositif de radiocommunication d'une passerelle dudit parc qui est estimée être à une distance géographique de ladite passerelle requérante inférieure à une distance prédéterminée, si une telle passerelle existe, et des moyens 212 de transmission à ladite passerelle requérante d'un message d'acquittement que le dispositif de radiocommunication de ladite autre passerelle a été activé.

Selon un mode de réalisation de l'unité de contrôle 11 d'une passerelle 10 selon l'invention (voir la passerelle 10ⱼ, à la Fig. 1), elle comprend un processeur 11P et une mémoire 11M prévue pour stocker un programme comprenant des instructions qui peuvent être exécutées par le processeur 11P et pour stocker temporairement des données utilisées pendant l'exécution desdites instructions. Il comporte encore une interface 112 pour piloter l'interface 12 vers le réseau 30 et au moins une interface 113 pour piloter au moins un dispositif de radiocommunication 13 (de manière générale, plusieurs interfaces 113 et plusieurs dispositifs de radiocommunication 13 peuvent être prévus).

Parmi les programmes stockés dans la mémoire 11M se trouve un programme dont les instructions, lorsqu'elles sont exécutées par le processeur 11P, mettent en œuvre les étapes d'un procédé de test selon la présente invention. Ce programme constitue aussi les moyens 111 à 113, éventuellement les moyens 114 et 115, de la Fig. 5.

La présente invention concerne également des moyens de stockage 14, tels qu'une carte mémoire, un disque CD ou DVD, ou même un serveur accessible via le réseau 30 qui sont prévus pour stocker un programme d'ordinateur comprenant des instructions pour mettre en œuvre, lorsqu'il est chargé dans une mémoire 11M d'une unité de contrôle 11 d'une passerelle 10 et qu'il est exécuté par un processeur 11P de ladite unité de contrôle 10, les étapes d'un procédé de test selon la présente invention.

## Revendications

1. Procédé de test d'un dispositif de radiocommunication (13) d'une passerelle (10) à tester d'un parc de passerelles, chaque passerelle du parc de passerelle étant reliée à un système gestionnaire (20) dudit parc de passerelle, **caractérisé en ce qu'**il comporte les étapes suivantes :
- une étape (E10) de transmission, mise en œuvre par ladite passerelle (10) à tester, d'un message de commande audit système gestionnaire (20),
- une étape d'activation (E11), mise en œuvre par ledit système gestionnaire (20) à réception dudit message de commande, d'au moins un dispositif de radiocommunication d'une passerelle voisine dudit parc qui est estimée être à une distance géographique de ladite passerelle (10) à tester inférieure à une distance prédéterminée, si une telle passerelle existe, et,
- une étape (E1) d'émission par ledit dispositif de radiocommunication (13) de ladite passerelle (10) à tester d'un message de requête de réponse requérant de tout dispositif de radiocommunication d'une passerelle dudit parc voisine qui a reçu ledit message, une réponse sous forme d'un message de réponse,
- une étape (E2) de réception de tout éventuel message de réponse et
- une étape (E3) de diagnostic diagnostiquant un bon fonctionnement dudit dispositif de radiocommunication (13) de la passerelle (10) à tester en cas de réception d'au moins un message de réponse.

2. Procédé de test selon la revendication 1, **caractérisé en ce que** ledit message de requête de réponse demande que seules des passerelles voisines présentant des caractéristiques de communication particulières y répondent.

3. Procédé de test selon la revendication 1 ou 2, **caractérisé en ce que** ladite étape (E3) de diagnostic diagnostique un possible dysfonctionnement dudit dispositif de radiocommunication (13) de la passerelle (10) à tester en cas d'absence de réception d'un message de réponse.

4. Procédé de test selon l'une des revendications précédentes, **caractérisé en ce que** ladite étape de transmission (E10) est mise en œuvre en cas d'absence de réception d'un message de réponse à l'étape (E3), ladite étape d'émission (E1), ladite étape de réception (E2) et ladite étape de diagnostic (E3) étant de nouveau mises en œuvre par ledit dispositif de radiocommunication (13) de la passerelle (10) à tester à réception d'un message d'acquittement que l'étape activation (E11) a été mise en œuvre.

5. Procédé de test selon la revendication 4, **caractérisé en ce qu'**il comporte encore :
- une étape (E12) de transmission, mise en œuvre par ledit système gestionnaire (20) dans le cas où aucune passerelle dudit parc n'est à une distance géographique estimée de ladite passerelle (10) à tester inférieure à une distance prédéterminée, d'un message d'avertissement à ladite passerelle (10) à tester,
- une étape de diagnostic (E13), mise en œuvre par ladite passerelle (10) à tester à réception dudit message d'avertissement, diagnostiquant un possible dysfonctionnement du dispositif de radiocommunication (13) de ladite passerelle (10) à tester.

6. Procédé de test selon une des revendications 3 à 5, **caractérisé en ce que** ladite étape de diagnostic (E'3) nouvellement mise en œuvre diagnostique soit un bon fonctionnement dudit dispositif de radiocommunication (13) de la passerelle (10) à tester en cas de réception d'au moins un message de réponse, soit un possible dysfonctionnement dudit dispositif de radiocommunication (13) de la passerelle (10) à tester en cas d'absence de réception d'un message de réponse.

7. Procédé de test selon une des revendications 3 à 6, **caractérisé en ce que** ladite étape d'activation (E11) comprend :
- une étape (E111) de sélection d'une passerelle dudit parc de passerelles si la distance géographique qui la sépare de ladite passerelle (10) à tester est inférieure à une distance prédéterminée,
- une étape de vérification que la passerelle sélectionnée est inactive et si elle l'est
- une étape d'activation (E112) de ladite passerelle sélectionnée.
et si elle ne l'est pas :
- une étape (E12) de transmission à ladite passerelle à tester d'un message d'avertissement qui, à réception, met en œuvre une étape de diagnostic (E13) diagnostiquant un possible dysfonctionnement du dispositif de radiocommunication de la passerelle à tester.

8. Procédé de test selon une des revendications 3 à 7, **caractérisé en ce qu'**il comporte une étape (E20) de vérification, mise en œuvre par ledit système gestionnaire (20) à réception dudit message de commande, qu'au moins une passerelle est située à une distance inférieure à une distance prédéterminée de ladite passerelle (10) à tester, et, si tel n'est pas le cas, une étape (E12) de transmission à ladite passerelle (10) à tester d'un message d'avertissement qui, à réception, met en œuvre une étape de diagnostic (E13) diagnostiquant un possible dysfonctionnement du dispositif de radiocommunication (13) de la passerelle (10) à tester.

9. Procédé de test selon une des revendications 3 à 8, **caractérisé en ce qu'**il comporte une étape (E15) de désactivation de la ou les passerelles qui ont été activées par ledit système gestionnaire (20) à l'occasion de la mise en œuvre de l'étape d'activation (E11).

10. Procédé de test selon la revendication 1, **caractérisé en ce que** ladite étape de transmission (E10) est mise en œuvre sous l'impulsion d'une étape de déclenchement (E30), elle-même mise en œuvre par ladite passerelle (10) arbitrairement, périodiquement ou suite à un événement.

11. Procédé de test selon la revendication précédente, **caractérisé en ce qu'**il comporte une étape (E40), mise en œuvre par ledit système gestionnaire (20), pour demander à ladite passerelle (10) de mettre en œuvre ladite étape de déclenchement (E30).

12. Passerelle (10) d'un parc de passerelles gérées par un système gestionnaire (20) dudit parc, ladite passerelle (10) comportant au moins un dispositif de radiocommunication (13), **caractérisée en ce qu'**elle comporte :
- des moyens (114) de transmission d'un message de commande audit système gestionnaire pour qu'il active au moins un dispositif de radiocommunication d'une passerelle voisine dudit parc qui est estimée être à une distance géographique de ladite passerelle inférieure à une distance prédéterminée, si une telle passerelle existe, et
- des moyens (115) de réception d'un message d'acquittement de l'activation par ledit système gestionnaire (20) d'une nouvelle passerelle distante et de commande d'une nouvelle émission d'un message de commande, une nouvelle réception et un nouveau diagnostic.
- des moyens (111) de commande dudit dispositif de radiocommunication (13) pour qu'il émette un message de requête de réponse requérant de tout dispositif de radiocommunication d'une passerelle voisine dudit parc recevant ledit message, une réponse sous forme d'un message de réponse,
- des moyens (112) de réception de tout éventuel message de réponse et
- des moyens (113) de diagnostic diagnostiquant un bon fonctionnement dudit dispositif de radiocommunication (13) en cas de réception d'au moins un message de réponse par ledit dispositif de radiocommunication (13).

13. Système gestionnaire (20) d'un parc de passerelles, **caractérisé en ce qu'**il comporte :
- des moyens (210) de réception d'un message de commande transmis d'une passerelle requérante,
- des moyens (211) d'activation pour, à réception d'un message de commande par lesdits moyens de réception, activer au moins un dispositif de radiocommunication d'une passerelle dudit parc qui est estimée être à une distance géographique de ladite passerelle requérant inférieure à une distance prédéterminée, si une telle passerelle existe,
- des moyens (212) de transmission à ladite passerelle requérante d'un message d'acquittement que le dispositif de radiocommunication de ladite autre passerelle a été activé.

14. Programme d'ordinateur chargé dans une mémoire (11M) d'une unité de contrôle (11) d'une passerelle (10) comprenant des instructions qui, lorsqu'elles sont exécutées par un processeur (11P) de ladite unité de contrôle (11), mettent en œuvre un procédé de test selon une des revendications 1 à 11.

15. Moyens de stockage, **caractérisés en ce qu'**ils stockent un programme d'ordinateur comprenant des instructions pour mettre en œuvre, lorsqu'il est chargé dans une mémoire (11M) d'une unité de contrôle (11) d'une passerelle (10) et qu'il est exécuté par un processeur (11P) de ladite unité de contrôle (11), un procédé selon l'une quelconque des revendications 1 à 11.

## Patentansprüche

1. Verfahren zum Testen einer Funkkommunikationsvorrichtung (13) eines zu testenden Gateways (10) eines Pools von Gateways, wobei jedes Gateway des Gateway-Pools mit einem Verwaltungssystem (20) des Gateway-Pools verbunden ist, **dadurch gekennzeichnet, dass** es die folgenden Schritte aufweist:
- einen von dem zu testenden Gateway (10) ausgeführten Schritt zum Übertragen (E10) einer Steuernachricht an das Verwaltungssystem (20),
- einen von dem Verwaltungssystem (20) bei Empfang der Steuernachricht ausgeführten Schritt zum Aktivieren (E11) von mindestens einer Funkkommunikationsvorrichtung eines benachbarten Gateways des Pools, das sich geschätzt in einer geografischen Entfernung von dem zu testenden Gateway (10) befindet, die kleiner als eine vorbestimmte Entfernung ist, falls ein solches Gateway existiert, und,
- einen Schritt zum Senden (E1) einer Antwortanforderungsnachricht durch die Funkkommunikationsvorrichtung (13) des zu testenden Gateways (10), die von allen Funkkommunikationsvorrichtungen eines Gateways des benachbarten Pools, das die Nachricht empfangen hat, eine Antwort in Form einer Antwortnachricht anfordert,
- einen Schritt zum Empfangen (E2) aller möglichen Antwortnachrichten und
- einen Schritt zum Diagnostizieren (E3), der eine einwandfreie Funktion der Funkkommunikationsvorrichtung (13) des zu testenden Gateways (10) bei Empfang mindestens einer Antwortnachricht diagnostiziert.

2. Verfahren zum Testen nach Anspruch 1, **dadurch gekennzeichnet, dass** die Antwortanforderungsnachricht anfordert, dass nur benachbarte Gateways mit bestimmten Kommunikationseigenschaften darauf antworten.

3. Verfahren zum Testen nach Anspruch 1 oder 2, **dadurch gekennzeichnet, dass** der Schritt zum Diagnostizieren (E3) eine mögliche Fehlfunktion der Funkkommunikationsvorrichtung (13) des zu testenden Gateways (10) bei fehlendem Empfang einer Antwortnachricht diagnostiziert.

4. Verfahren zum Testen nach einem der vorausgehenden Ansprüche, **dadurch gekennzeichnet, dass** der Schritt zum Übertragen (E10) bei fehlendem Empfang einer Antwortnachricht in Schritt (E3) ausgeführt wird, wobei der Schritt zum Senden (E1), der Schritt zum Empfangen (E2) und der Schritt zum Diagnostizieren (E3) von der Funkkommunikationsvorrichtung (13) des zu testenden Gateways (10) bei Empfang einer Bestätigungsnachricht, dass der Schritt zum Aktivieren (E11) ausgeführt wurde, erneut ausgeführt werden.

5. Verfahren zum Testen nach Anspruch 4, **dadurch gekennzeichnet, dass** es darüber hinaus Folgendes aufweist:
- einen Schritt zum Übertragen (E12) einer Warnnachricht an das zu testende Gateway (10), der von dem Verwaltungssystem (20) in dem Fall ausgeführt wird, wenn sich kein Gateway des Pools in einer geschätzten geografischen Entfernung von dem zu testenden Gateway (10) befindet, die kleiner als eine vorbestimmte Entfernung ist,
- einen Schritt zum Diagnostizieren (E13), der von dem zu testenden Gateway (10) bei Empfang der Warnnachricht ausgeführt wird und eine mögliche Fehlfunktion der Funkkommunikationsvorrichtung (13) des zu testenden Gateways (10) diagnostiziert.

6. Verfahren zum Testen nach einem der Ansprüche 3 bis 5, **dadurch gekennzeichnet, dass** der neu ausgeführte Schritt zum Diagnostizieren (E3) entweder eine einwandfreie Funktion der Funkkommunikationsvorrichtung (13) des zu testenden Gateways (10) bei Empfang mindestens einer Antwortnachricht diagnostiziert, oder eine mögliche Fehlfunktion der Funkkommunikationsvorrichtung (13) des zu testenden Gateways (10) bei fehlendem Empfang einer Antwortnachricht.

7. Verfahren zum Testen nach einem der Ansprüche 3 bis 6, **dadurch gekennzeichnet, dass** der Schritt zum Aktivieren (E11) Folgendes aufweist:
- einen Schritt zum Auswählen (E111) eines Gateways des Pools von Gateways, wenn die geografische Entfernung, die es von dem zu testenden Gateway (10) trennt, kleiner als eine vorbestimmte Entfernung ist,
- einen Schritt zum Überprüfen, ob das ausgewählte Gateway inaktiv ist, und wenn dies der Fall ist,
- einen Schritt zum Aktivieren (E112) des ausgewählten Gateways,
und wenn dies nicht der Fall ist:
- einen Schritt zum Übertragen (E12) einer Warnnachricht an das zu testende Gateway, die bei Empfang einen Schritt zum Diagnostizieren (E13) ausführt, der eine mögliche Fehlfunktion der Funkkommunikationsvorrichtung des zu testenden Gateways diagnostiziert.

8. Verfahren zum Testen nach einem der Ansprüche 3 bis 7, **dadurch gekennzeichnet, dass** es einen von dem Verwaltungssystem (20) bei Empfang der Steuernachricht ausgeführten Schritt zum Überprüfen (E20) aufweist, ob sich mindestens ein Gateway in einer Entfernung von dem zu testenden Gateway (10) befindet, die kleiner als eine vorbestimmte Entfernung ist, und, wenn dies nicht der Fall ist, einen Schritt zum Übertragen (E12) einer Warnnachricht an das zu testende Gateway (10), die bei Empfang einen Schritt zum Diagnostizieren (E13) ausführt, der eine mögliche Fehlfunktion der Funkkommunikationsvorrichtung (13) des zu testenden Gateways (10) diagnostiziert.

9. Verfahren zum Testen nach einem der Ansprüche 3 bis 8, **dadurch gekennzeichnet, dass** es einen Schritt zum Deaktivieren (E15) des oder der Gateways aufweist, die von dem Verwaltungssystem (20) anlässlich des Ausführens des Schritts zum Aktivieren (E11) aktiviert wurden.

10. Verfahren zum Testen nach Anspruch 1, **dadurch gekennzeichnet, dass** der Schritt zum Übertragen (E10) unter dem Einfluss eines Schritts zum Auslösen (E30) ausgeführt wird, der willkürlich, regelmäßig oder nach einem Ereignis von dem Gateway (10) ausgeführt wird.

11. Verfahren zum Testen nach dem vorausgehenden Anspruch, **dadurch gekennzeichnet, dass** es einen von dem Verwaltungssystem (20) ausgeführten Schritt zum Anfordern (E40) an das Gateway (10) aufweist, den Schritt zum Auslösen (E30) auszuführen.

12. Gateway (10) eines Pools von Gateways, die von einem Verwaltungssystem (20) des Pools verwaltet werden, wobei das Gateway (10) mindestens eine Funkkommunikationsvorrichtung (13) aufweist, **dadurch gekennzeichnet, dass** es Folgendes aufweist:
- Mittel zum Übertragen (114) einer Steuernachricht an das Verwaltungssystem, damit dieses mindestens eine Funkkommunikationsvorrichtung eines benachbarten Gateways des Pools aktiviert, das sich geschätzt in einer geografischen Entfernung von dem Gateway befindet, die kleiner als eine vorbestimmte Entfernung ist, falls ein solches Gateway existiert, und
- Mittel zum Empfangen (115) einer Bestätigungsnachricht der Aktivierung eines neuen entfernten Gateways durch das Verwaltungssystem (20) und zum Steuern einer neuen Sendung einer Steuernachricht, eines neuen Empfangs und einer neuen Diagnose,
- Mittel zum Steuern (111) der Funkkommunikationsvorrichtung (13), damit diese eine Antwortanforderungsnachricht sendet, die von allen Funkkommunikationsvorrichtungen eines benachbarten Gateways des Pools, das die Nachricht empfängt, eine Antwort in Form einer Antwortnachricht anfordert,
- Mittel zum Empfangen (112) aller möglichen Antwortnachrichten und
- Mittel zum Diagnostizieren (113), die bei Empfang mindestens einer Antwortnachricht von der Funkkommunikationsvorrichtung (13) eine einwandfreie Funktion der Funkkommunikationsvorrichtung (13) diagnostizieren.

13. Verwaltungssystem (20) eines Pools von Gateways, **dadurch gekennzeichnet, dass** es Folgendes aufweist:
- Mittel zum Empfangen (210) einer von einem anfordernden Gateway übertragenen Steuernachricht,
- Mittel zum Aktivieren (211), um bei Empfang einer Steuernachricht durch die Mittel zum Empfangen mindestens eine Funkkommunikationsvorrichtung eines Gateways des Pools zu aktivieren, das sich geschätzt in einer geografischen Entfernung von dem anfordernden Gateway befindet, die kleiner als eine vorbestimmte Entfernung ist, falls ein solches Gateway existiert,
- Mittel (212) zum Übertragen einer Bestätigungsnachricht an das anfordernde Gateway, dass die Funkkommunikationsvorrichtung des anderen Gateways aktiviert wurde.

14. In einen Speicher (11M) einer Steuereinheit (11) eines Gateways (10) geladenes Computerprogramm, das Anweisungen aufweist, die bei ihrer Ausführung durch einen Prozessor (11P) der Steuereinheit (11) ein Testverfahren nach einem der Ansprüche 1 bis 11 ausführen.

15. Mittel zum Speichern, **dadurch gekennzeichnet, dass** sie ein Computerprogramm speichern, das Anweisungen aufweist, um ein Verfahren nach einem der Ansprüche 1 bis 11 auszuführen, wenn es in einem Speicher (11M) einer Steuereinheit (11) eines Gateways (10) geladen ist und durch einen Prozessor (11P) der Steuereinheit (11) ausgeführt wird.

## Claims

1. Method for testing a radiocommunication device (13) of a gateway (10) to be tested from a pool of gateways, each gateway from the gateway pool being connected to a management system (20) of said gateway pool, **characterized in that** it includes the following steps:
- a step (E10) of transmission, implemented by said gateway (10) to be tested, of a control message to said management system (20),
- a step (E11) of activation, implemented by said management system (20) on receiving said control message, of at least one radiocommunication device of an adjacent gateway from said pool that is estimated to be at a geographical distance from said gateway (10) to be tested shorter than a predetermined distance, if such a gateway exists, and
- a step (E1) of sending, by said radiocommunication device (13) of said gateway (10) to be tested, of a response request message requesting a response in the form of a response message from any radiocommunication device of an adjacent gateway from said pool that has received said message,
- a step (E2) of reception of any response message, if applicable, and
- a diagnosis step (E3) diagnosing correct operation of said radiocommunication device (13) of the gateway (10) to be tested if at least one response message is received.

2. Test method according to Claim 1, **characterized in that** said response request message asks only adjacent gateways having specific communication characteristics to respond to it.

3. Test method according to Claim 1 or 2, **characterized in that** said diagnosis step (E3) diagnoses a possible malfunction in said radiocommunication device (13) of the gateway (10) to be tested if no response message is received.

4. Test method according to one of the preceding claims, **characterized in that** said transmission step (E10) is implemented if no response message is received in step (E3), said sending step (E1), said reception step (E2) and said diagnosis step (E3) being implemented again by said radiocommunication device (13) of the gateway (10) to be tested on reception of a message acknowledging that the activation step (E11) has been implemented.

5. Test method according to Claim 4, **characterized in that** it also includes:
- a step (E12) of transmission, implemented by said management system (20) if no gateway from said pool is at an estimated geographical distance from said gateway (10) to be tested shorter than a predetermined distance, of a warning message to said gateway (10) to be tested,
- a diagnosis step (E13), implemented by said gateway (10) to be tested on receiving said warning message, diagnosing a possible malfunction in the radiocommunication device (13) of said gateway (10) to be tested.

6. Test method according to one of Claims 3 to 5, **characterized in that** said newly implemented diagnosis step (E3) diagnoses either correct operation of said radiocommunication device (13) of the gateway (10) to be tested if at least one response message is received, or a possible malfunction in said radiocommunication device (13) of the gateway (10) to be tested if no response message is received.

7. Test method according to one of Claims 3 to 6, **characterized in that** said activation step (E11) comprises:
- a step (E111) of selection of a gateway from said pool of gateways if the geographical distance separating it from said gateway (10) to be tested is shorter than a predetermined distance,
- a step of verification that the selected gateway is inactive and, if so,
- a step (E112) of activation of said selected gateway,
and, if not:
- a step (E12) of transmission of a warning message to said gateway to be tested, which warning message, on reception, implements a diagnosis step (E13) diagnosing a possible malfunction in the radiocommunication device of the gateway to be tested.

8. Test method according to one of Claims 3 to 7, **characterized in that** it includes a step (E20) of verification, implemented by said management system (20) on receiving said control message, that at least one gateway is located a distance shorter than a predetermined distance from said gateway (10) to be tested, and, if this is not the case, a step (E12) of transmission of a warning message to said gateway (10) to be tested, which warning message, on reception, implements a diagnosis step (E13) diagnosing a possible malfunction in the radiocommunication device (13) of the gateway (10) to be tested.

9. Test method according to one of Claims 3 to 8, **characterized in that** it includes a step (E15) of deactivation of the one or more gateways that have been activated by said management system (20) during implementation of the activation step (E11).

10. Test method according to Claim 1, **characterized in that** the implementation of said transmission step (E10) is instigated by a triggering step (E30), which is itself implemented by said gateway (10) arbitrarily, periodically or in response to an event.

11. Test method according to the preceding claim, **characterized in that** it includes a step (E40), implemented by said management system (20), for asking said gateway (10) to implement said triggering step (E30).

12. Gateway (10) from a pool of gateways that are managed by a management system (20) of said pool, said gateway (10) including at least one radiocommunication device (13), **characterized in that** said gateway includes:
- means (114) for transmitting a control message to said management system in order for it to activate at least one radiocommunication device of an adjacent gateway from said pool that is estimated to be at a geographical distance from said gateway shorter than a predetermined distance, if such a gateway exists, and
- means (115) for receiving a message acknowledging the activation by said management system (20) of a new remote gateway and for controlling renewed sending of a control message, renewed reception and renewed diagnosis,
- means (111) for controlling said radiocommunication device (13) so that it sends a response request message requesting a response in the form of a response message from any radiocommunication device of an adjacent gateway from said pool receiving said message,
- means (112) for receiving any response message, if applicable, and
- diagnosis means (113) diagnosing correct operation of said radiocommunication device (13) if at least one response message is received by said radiocommunication device (13).

13. Management system (20) of a pool of gateways, **characterized in that** it includes:
- means (210) for receiving a control message transmitted from a requesting gateway,
- activation means (211) for activating, on reception of a control message by said receiving means, at least one radiocommunication device of a gateway from said pool that is estimated to be at a geographical distance from said requesting gateway shorter than a predetermined distance, if such a gateway exists,
- means (212) for transmitting to said requesting gateway a message acknowledging that the radiocommunication device of said other gateway has been activated.

14. Computer program loaded in a memory (11M) of a control unit (11) of a gateway (10), comprising instructions that, when executed by a processor (IIP) of said control unit (11), implement a test method according to one of Claims 1 to 11.

15. Storage means, **characterized in that** they store a computer program comprising instructions for implementing a method according to any one of Claims 1 to 11 when said computer program is loaded in a memory (11M) of a control unit (11) of a gateway (10) and is executed by a processor (11P) of said control unit (11).
